# EUROPÄISCHE PATENTSCHRIFT

(11) **EP 4 126 600 B1**
(45) Veröffentlichungstag und Bekanntmachung des Hinweises auf die Patenterteilung: **25.09.2024**
(21) Anmeldenummer: 21715559.7
(22) Anmeldetag: 26.03.2021
(51) Int. Cl.: B60R 22/22, B60R 22/24, B62D 65/00, B62D 65/14, G06Q 10/08

(54) **VERFAHREN ZUR HERSTELLUNG EINES FAHRZEUGS SOWIE SICHERHEITSGURT-ANORDNUNG**
METHOD FOR PRODUCING A VEHICLE, AND SAFETY BELT ASSEMBLY
PROCÉDÉ DE PRODUCTION D'UN VÉHICULE ET ENSEMBLE DE CEINTURE DE SÉCURITÉ

(30) Priorität: 02.04.2020 DE 102020204291
(43) Veröffentlichungstag der Anmeldung: 08.02.2023
(73) Patentinhaber: VOLKSWAGEN AKTIENGESELLSCHAFT, 38440 Wolfsburg (DE)
(72) Erfinder: EFFENBERGER, Witali, 38176 Wendeburg (DE)
(86) Internationale Anmeldenummer: PCT/EP2021/057878
(87) Internationale Veröffentlichungsnummer: WO 2021/198055

(56) Entgegenhaltungen:
- DE-A1- 102015 106 450
- DE-A1- 102018 215 364
- DE-U1- 202010 001 443

## Beschreibung

Die Erfindung betrifft ein Verfahren zur Herstellung eines Fahrzeugs nach dem Oberbegriff des Anspruches 1 sowie eine Sicherheitsgurt-Anordnung für ein solches Fahrzeug nach Anspruch 10.

Bei der Fahrzeugherstellung wird im fahrzeugbauenden Werk die Fahrzeug-Karosserie entlang einer Reihe von Arbeitsstationen einer Produktionslinie transferiert, in denen Anbauteile an die Fahrzeug-Karosserie montierbar sind. Die Anbauteile können für eine automatisierte Bauzustandsdokumentation jeweils mit einem RFID-Transponder gekennzeichnet sein. Diese können einem als Lesegerät wirkenden RFID-Gate am Ende der Produktionslinie gescannt werden, wodurch die jeweils zugeordneten Anbauteile dokumentierbar sind. Bei der RFID-Technologie erfolgt die Kommunikation zwischen dem RFID-Transponder mit dem Lesegerät drahtlos bzw. berührungslos per Funkübertragung. Ein direkter Sichtkontakt ist nicht erforderlich.

In einem gattungsgemäßen Verfahren wird bei der Fahrzeugherstellung ein Gurtaufroller einer Sicherheitsgurt-Anordnung in einen Hohlraum einer als Blech-Hohlträger gebildeten Fahrzeug-Karosserie positioniert. Der im Hohlraum der Fahrzeug-Karosseriesäule verbaute Gurtaufroller ist gegenüber einem vom RFID-Gate emittierten elektromagnetischen Feld weitgehend abgeschirmt. Aufgrund dieser Abschirmung kommt im Stand der Technik die RFID-Technologie für den Gurtaufroller nicht zur Anwendung.

Aus der CN 106274792 A ist ein Sicherheitsgurt mit einem Frühwarnsystem bekannt. Aus der DE 10 2007 058 278 A1 ist ein Sicherheitsgurtsystem bekannt. Aus der US 2018/0072255 A1, aus der WO 98/32190 A2, aus der WO 2009/008949 A1 und aus der WO 2016/145054 A1 sind weitere Sicherheitsgurtsystem bekannt. Die DE 20 2010 001 443 U1 offenbart den Einsatz der RFID Technik zur Identifizierung aller Baugruppen in Fahrzeugen, sowie das Verfahren nach dem Oberbegriff von Anspruch 1.

Die Aufgabe der Erfindung besteht darin, ein Verfahren zur Herstellung eines Fahrzeugs bereitzustellen, bei dem in einfacher Weise eine automatisierte Bauzustandsdokumentation bei einem in der Fahrzeug-Karosserie verbauten Gurtaufroller ermöglicht ist.

Die Aufgabe ist durch die Merkmale des Anspruches 1 oder 10 gelöst. Bevorzugte Weiterbildungen der Erfindung sind in den Unteransprüchen offenbart.

Die Erfindung beruht auf dem Sachverhalt, dass im Stand der Technik die für den Einsatz der RFID-Technologie geeigneten Anbauteile direkt mit einem zugeordneten Anbauteil-Transponder gekennzeichnet werden. Die Kennzeichnung der Anbauteile wird vor der Montage in der Fahrzeug-Karosserie durchgeführt. In Abkehr davon erfolgt gemäß dem kennzeichnenden Teil des Anspruches 1 keine direkte Kennzeichnung des Gurtaufrollers mit einem Gurtaufroller-Transponder. Vielmehr wird der Gurtaufroller-Transponder örtlich unabhängig vom Gurtaufroller positioniert, und zwar an dem Gurtband des Gurtaufrollers außerhalb des Karosseriesäulen-Hohlraums. Auf diese Weise ist der Gurtaufroller-Transponder im Fahrzeuginnenraum der Fahrzeug-Karosserie freigelegt, wodurch eine Daten-Kommunikation mit dem Lesegerät möglich ist.

Erfindungsgemäß wird somit der Sachverhalt genutzt, dass der Gurtaufroller zusammen mit dem Gurtband sowie einem am Gurtbandende befindlichen Gurtendbeschlag Bestandteil einer Sicherheitsgurt-Anordnung ist. Diese wird in der Produktionslinie als eine einteilige Vormontageeinheit bzw. Anbauteil in der Fahrzeug-Karosserie verbaut. Im verbauten Zustand kann der Gurtendbeschlag der Sicherheitsgurt-Anordnung im Fahrzeuginnenraum an einem Endbeschlagstraffer oder ortsfest unmittelbar an der Fahrzeug-Karosserie befestigt sein.

Im Hinblick auf eine störungsfreie Daten-Kommunikation zwischen dem Gurtaufroller-Transponder und dem RFID-Lesegerät ist es bevorzugt, wenn der Gurtaufroller-Transponder gegenüber mechanischen Belastungen bzw. Beschädigungen während der Fahrzeugmontage in der Produktionslinie weitgehend geschützt ist. Vor diesem Hintergrund ist es bevorzugt, wenn der Gurtaufroller-Transponder unmittelbar am Gurtbandende des aus dem Gurtaufroller herausgeführten Gurtbands befestigt ist.

In gängiger Praxis kann die Anbindung des Gurtbandendes am Gurtendbeschlag wie folgt realisiert sein: So kann das Gurtband am Gurtbandende umgeschlagen werden, und zwar unter Bildung einer Gurtbandschlaufe, die durch eine Gurtöse des Gurtendbeschlags geführt ist. Der Gurtendbeschlag kann unmittelbar an der Fahrzeug-Karosserie montiert sein oder alternativ dazu an einem Endbeschlag straffer montiert sein. Der Gurtband-Umschlag bildet zusammen mit dem übrigen Gurtband einen Zweilagenaufbau, bei dem die beiden Gurtband-Lagen miteinander verbunden, insbesondere vernäht, sind. Im Hinblick auf einen vor äußeren Umwelteinflüssen geschützten Einbauort ist es bevorzugt, wenn der Gurtaufroller-Transponder in dem Zweilagenaufbau, bestehend aus Gurtband-Umschlag und Gurtband integriert ist. Für eine fertigungstechnisch besonders einfache Befestigung ist es bevorzugt, wenn der Gurtaufroller-Transponder zwischen den beiden Gurtband-Lagen angeordnet wird und darin eingenäht wird.

Bei einer Großserienproduktion kann die Sicherheitsgurt-Anordnung in einem Zuliefer-Werk vormontiert werden. In diesem Fall kann der Gurtaufroller-Transponder bereits im Zuliefer-Werk am Gurtband befestigt werden.

Der Gurtaufroller-Transponder kann in gängiger Praxis aus einem Chip und einer Antenne aufgebaut sein. In einer Ausführungsavariante kann der Gurtaufroller-Transponder zusammen mit einer Vielzahl von weiteren Gurtaufroller-Transpondern auf einer Endlos-Folienbahn vorgehalten sein. Die Endlos-Folienbahn kann auf einer Rolle aufwickelbar sein. Beim Gurtband-Herstellungsprozess kann die Endlos-Folienbahn in einer Gurtbahn-Längsrichtung langestreckt im Gurtband integriert sein sowie zwischen den beiden Gurtband-Lagen positioniert werden. Die Endlos-Folienbahn kann sich dabei komplett über die gesamte Gurtband-Länge erstrecken.

In einer weiteren Ausführungsform kann das Gurtband einen Einlagenaufbau mit miteinander verwebten Kettfäden und Schussfäden aufweisen. Von den Kettfäden kann zumindest ein modifizierter Kettfaden eine Antennen-Eigenschaft eines RFID-Transponders aufweisen. In diesem Fall kann zumindest ein Transponder-Chip auf der Gurtband-Oberfläche positioniert werden und in Kontakt mit dem modifizierten Kettfaden gebracht werden. Der Transponder-Chip kann auf unterschiedlicher Weise auf der Gurtband-Oberfläche befestigt werden. Beispielhaft kann der Transponder-Chip zwischen einem Chip-Träger und der Gurtband-Oberfläche positioniert sein. Der Chip-Träger kann aus Kunststoff gefertigt sein und durch Thermoformen stoffschlüssig mit dem Gurtband verbunden sein.

Alternativ dazu kann das einlagige Gurtband eine Schussfaden-Doppellage aufweisen, und zwar mit in Gurtband-Dickenrichtung übereinanderliegenden Schussfaden-Lagen. Der modifizierte Kettfaden kann zwischen den beiden Schussfaden-Lagen gelegt werden, wodurch der modifizierte Kettfaden vor äußeren mechanischen Einflüssen geschützt ist. Lediglich an einer Kontaktstelle kann der modifizierte Kettfaden nach außen freigelegt sein. An der freigelegten Kontaktstelle kann der Transponder-Chip in Kontakt mit dem nach außen freigelegten, modifizierten Kettfaden sein.

Ferner kann der Gurtaufroller-Transponder als ein Standard-Transponder ausgeführt sein. Dieser kann am fertiggestellten Gurtband, etwa am Gurtband-Ende, aufgeklebt oder aufgenäht werden.

Nachfolgend ist ein Ausführungsbeispiel der Erfindung anhand der beigefügten Figuren beschrieben.

Es zeigen:
- Fig. 1: in einer Schnittdarstellung entlang einer Schnittebene yz eine SeitenwandKarosseriestruktur mit darin verbauter Sicherheitsgurt-Anordnung;
- Fig. 2: in einer vergrößerten Teilansicht ein an einem Gurtendbeschlag angebundenes Gurtbandende;

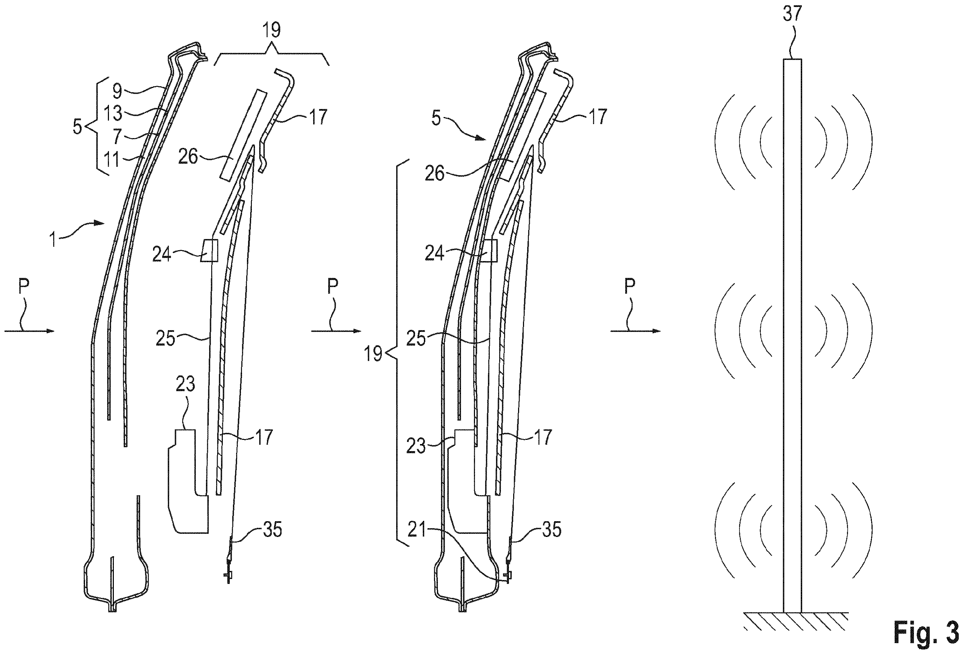

- Fig. 3: eine Ansicht, anhand der Prozessschritte in einer Produktionslinie eines fahrzeugbauenden Werks veranschaulicht sind; und
- Fig. 4 bis 8: weitere Ausführungsbeispiele der Erfindung.

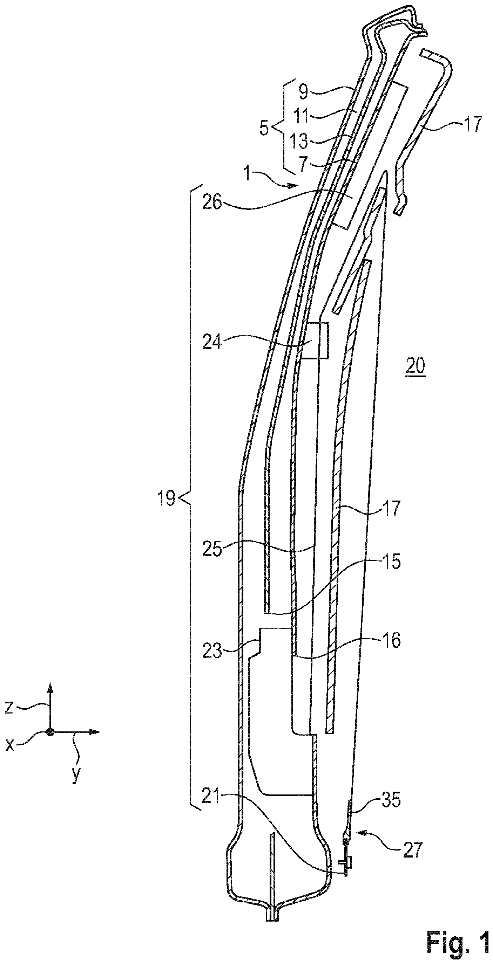

In der Fig. 1 ist eine Seitenwandbaugruppe einer Fahrzeug-Karosserie 1 in einer Schnittdarstellung gezeigt. Die Fahrzeug-Karosserie 1 weist bodenseitig einen Schweller 3 auf, der sich in der Fahrzeuglängsrichtung x zwischen Fahrzeug-Karosseriesäulen erstreckt, von denen in der Fig. 1 beispielhaft eine B-Säule 5 gezeigt ist. Die B-Säule 5 verbindet in der Fahrzeughochrichtung z den Schweller 3 mit einer Dachstruktur der Fahrzeug-Karosserie 1. In der Fig. 1 ist die B-Säule 5 als ein Blech-Hohlträger mit einem, dem Fahrzeuginnenraum 20 zugewandten Blechinnenteil 7 und einem fahrzeugäußeren Blechaußenteil 9 aufgebaut. Der vom Blechinnenteil 7 und vom Blechaußenteil 9 gebildete Blech-Hohlträger begrenzt ein, in der Fahrzeughochrichtung z verlaufendes sowie im Querschnitt weitgehend geschlossenes Hohlprofil 11. Innerhalb des Hohlprofils 11 erstreckt sich ein Verstärkungsblechteil 13 in der Fahrzeughochrichtung z. Im Blechinnenteil 7 sowie im Verstärkungsblechteil 13 sind in der Fig. 1 Montageöffnungen 15, 16 ausgebildet, damit ein Gurtaufroller 23 im Hohlprofil 11 der B-Säule 5 angeordnet werden kann.

Der Gurtaufroller 23 ist Bestandteil einer Sicherheitsgurt-Anordnung 19. Diese weist zusätzlich ein aus dem Gurtaufroller 23 herausgeführtes Gurtband 25, einen höhenverstellbaren Umlenkbeschlag 26 für das Gurtband 25, einen Gurtumlenker 24 sowie einen am Gurtbandende 27 angebundenen Gurtendbeschlag 21. In der Fig. 1 ist der Gurtendbeschlag 21 noch im demontierten Zustand gezeigt. Der Gurtendbeschlag 21 kann über eine Schraubverbindung ortsfest an der Fahrzeug-Karosserie montiert werden. Zudem sind in der Fig. 1 das Blechinnenteil 7 der B-Säule 5 sowie der Umlenkbeschlag 26 und der Gurtumlenker 24 von einer angedeuteten Innenverkleidung 17 sichtgeschützt überdeckt.

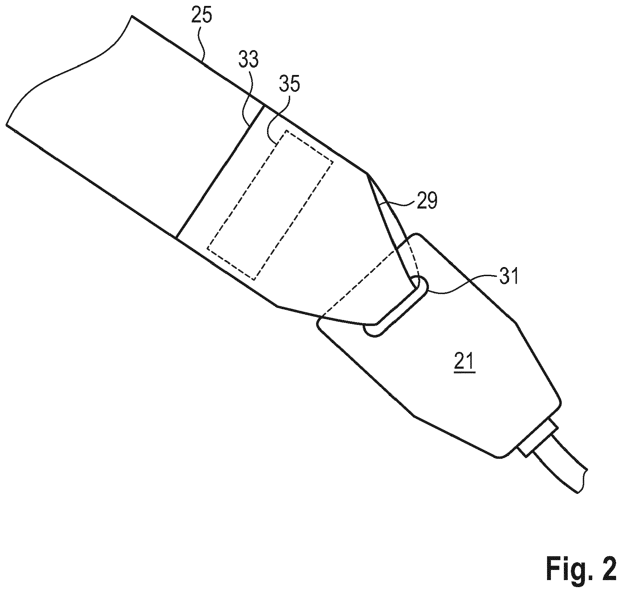

Zur Anbindung am Gurtendbeschlag 21 ist das Gurtband 25 am Gurtbandende 27 umgeschlagen, und zwar unter Bildung einer Gurtbandschlaufe 29 (Fig. 2), die durch eine Gurtöse 31 des Gurtendbeschlags 21 geführt ist. Der Gurtband-Umschlag 33 und das Gurtband 25 bilden in der Fig. 1 oder 2 einen Zweilagenaufbau, bei dem die beiden Gurtband-Lagen miteinander vernäht sind. Zwischen den beiden Gurtband-Lagen (das heißt Gurtband 25 und Gurtband-Umschlag 33) ist ein Gurtaufroller-Transponder 35 eingenäht. Der Gurtaufroller-Transponder kann am Ende der Produktionslinie P mit einem RFID-Gate 37 als Leseeinrichtung in Daten-Kommunikation treten. Von daher kann der eigentlich im Hohlprofil 11 positionierte und gegenüber dem elektromagnetischen Feld des RFID-Gates 37 abgeschirmte Gurtaufroller 23 durch Einsatz der RFID-Technologie für eine automatisierte Bauzustandsdokumentation erfasst werden.

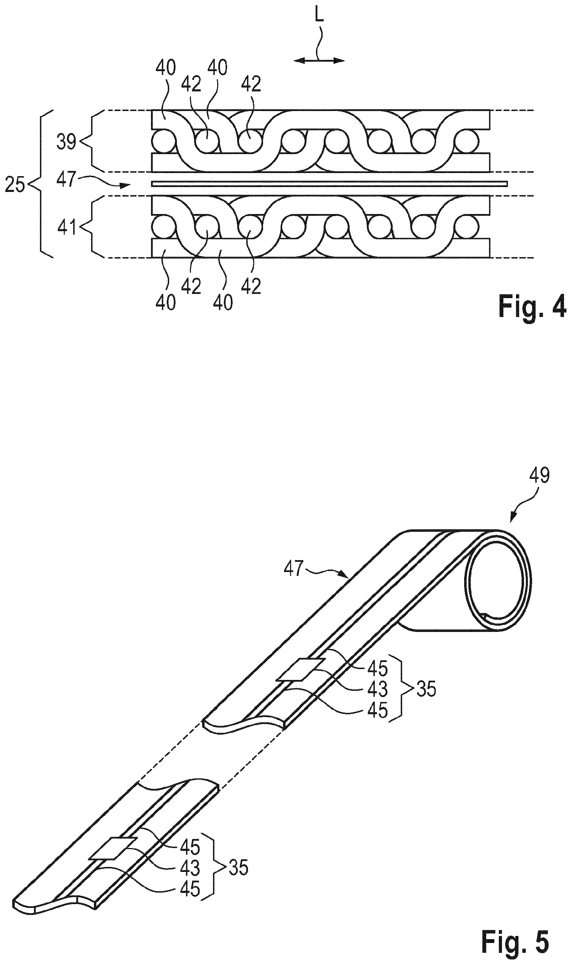

In den Fig. 4 ist in einer vergrößerten Teilschnittdarstellung der Materialaufbau eines Gurtbands 25 gemäß einem weiteren Ausführungsbeispiel gezeigt. Demzufolge weist das in der Fig. 4 gezeigte Gurtband 25 einen Zweilagenaufbau mit zwei Gurtband-Lagen 39, 41 auf. Die beiden Gurtband-Lagen 39, 41 sind (in nicht gezeigter Weise) miteinander vernäht. Wie aus der Figur 4 weiter hervorgeht, ist jede der beiden Gurtband-Lagen 39, 41 identisch gewebt, und zwar mit Kettfäden 40 und Schussfäden 42.

Zwischen den beiden Gurtbandlagen 39, 41 verläuft in der Gurtband-Längsrichtung L (Figur 4) ein Endlos-Folienband 47, auf dem gemäß der Figur 5 zumindest ein Gurtaufroller-Transponder 35, bestehend aus einem Chip 43 und einer Antenne 45, appliziert ist. Die Endlos-Folienbahn 47 erstreckt sich komplett über die gesamte Gurtband-Länge des Gurtbands 25. Wie aus der Fig. 5 hervorgeht, wird für eine Gurtband-Herstellung die Endlos-Folienbahn 47 auf einer Rolle 49 vorgehalten. Auf der Endlos-Folienbahn 47 sind insgesamt eine Vielzahl von Gurtaufroller-Transpondern 35 appliziert. Beim Gurtband-Herstellungsprozess wird die Folienbahn-Rolle 49 abgewickelt und die abgewickelte Endlos-Folienbahn 47 in der Gurband-Längsrichtung L zwischen den beiden Gurtband-Lagen 39, 41 positioniert.

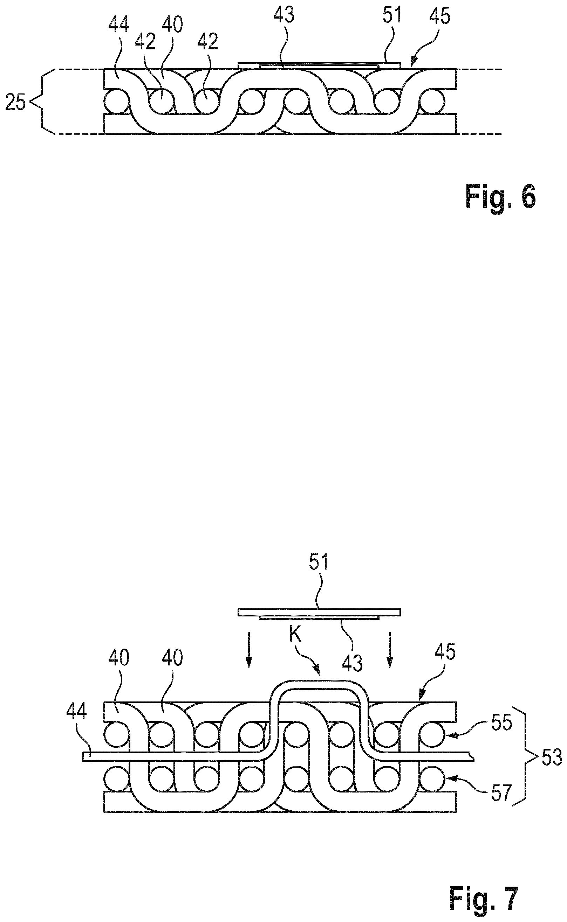

Im Gegensatz zur Figur 4 ist in der Figur 6 das Gurtband 25 als ein Einlagenaufbau mit miteinander verwebten Kettfäden 40 und Schussfäden 42 realisiert. Von den Kettfäden 40 ist ein modifizierter Kettfaden 44 eingewebt, der eine Antennen-Eigenschaft eines RFID-Transponders aufweist. In der Fig. 6 ist ein Transponder-Chip 43 auf der Gurtband-Oberfläche 46 positioniert, und zwar in Kontakt mit dem modifizierten Antennen-Kettfaden 44.

Der Transponder-Chip 43 ist in der Fig. 6 zwischen einem Chip-Träger 51 und der Gurtband-Oberfläche positioniert, das heißt geschützt vor äußeren mechanischen Einflüssen. Der Chip-Träger 51 ist mit seinem Kunststoffmaterial zum Beispiel durch Thermoformen stoffschlüssig mit dem Gurtband-Material verbunden.

In der Fig. 7 ist ein einlagiges Gurtband 25 gemäß einem weiteren Ausführungsbeispiel gezeigt.

Demzufolge ist in dem einlagigen Gurtband 25 eine Schussfaden-Doppellage 53 verwebt. Die Schussfaden-Doppellage 53 weist in der Gurtband-Dickenrichtung betrachtet übereinanderliegende Schussfaden-Lagen 55, 57 auf. Zwischen den beiden Schussfaden-Lagen 55, 57 ist ein modifizierter Antennen-Kettfaden 44 gelegt. Dieser ist in der Fig. an einer Kontaktstelle K nach außen freigelegt, an der der Transponder-Chip 43 in Kontakt mit dem modifizierten Kettfaden 44 bringbar ist. Der Transponder-Chip 43 kann - wie in der Figur 6 gezeigt - wiederum über seinen Chip-Träger 51 stoffschlüssig mit der Gurtband-Oberfläche 46 verbunden werden.

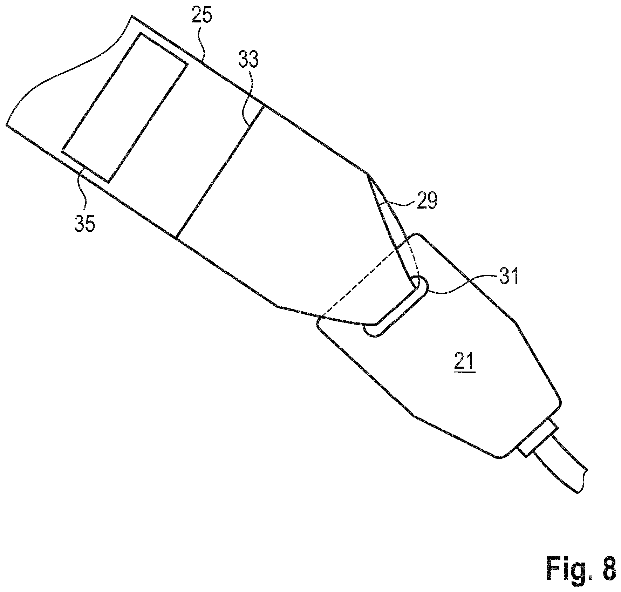

In der Fig. 8 ist ein Gurtband 25 gemäß einer weiteren Ausführungsvariante gezeigt, bei der der Gurtaufroller-Transponder 35 als ein Standard-Transponder realisiert ist. Dieser ist in der Fig. 7 an einer beliebigen, geeigneten Stelle am Gurtband 25 aufgeklebt oder aufgenäht. Beispielhaft kann der Gurtaufroller-Transponder 35 am Gurtband-Ende aufgeklebt sein, wie es in der Fig. 8 angedeutet ist.

### Bezugszeichenliste

- 1: Fahrzeug-Karosserie
- 3: Schweller
- 5: B-Säule
- 7: Blechinnenteil
- 9: Blechaußenteil
- 11: Hohlprofil
- 13: Verstärkungsblechteil
- 15, 16: Montageöffnungen
- 17: Innenverkleidung
- 19: Sicherheitsgurt-Anordnung
- 21: Gurtendbeschlag
- 23: Gurtaufroller
- 25: Gurtband
- 26: höhenverstellbarer Umlenkbeschlag
- 27: Gurtbandende
- 29: Gurtband-Schlaufe
- 31: Gurtband-Öse
- 33: Gurtband-Umschlag
- 35: Gurtaufroller-Transponder
- 37: RFID-Gate
- 39, 41: Gurtband-Lagen
- 40: Kettfäden
- 42: Schussfäden
- 43: Transponder-Chip
- 44: modifizierter Antennen-Kettfaden
- 45: Transponder-Antenne
- 46: Gurtband-Oberfläche
- 47: Folienband
- 49: Rolle
- 51: Chip-Träger
- 53: Schussfaden-Doppellage
- 55, 57: Schussfaden-Lagen
- K: Kontaktstelle
- L: Gurtband-Längsrichtung
- P: Produktionslinie

## Patentansprüche

1. Herstellungsverfahren eines Fahrzeugs, bei dem in einer Produktionslinie (P) eines fahrzeugbauenden Werks an eine Fahrzeug-Karosserie (1) Anbauteile montiert werden, an denen jeweils ein Anbauteil-Transponder befestigt ist, der nach dem Verbau des jeweiligen Anbauteiles im Fahrzeug mittels einer RFID-Leseeinrichtung (37) für eine Bauzustandsdokumentation erfasst wird, wobei in der Produktionslinie (P) als Anbauteil ein Gurtaufroller (23) einer Sicherheitsgurt-Anordnung (19) in einen Hohlraum (11) einer als Hohlträger gebildeten Fahrzeug-Karosseriesäule (5) verbaut wird, **dadurch gekennzeichnet, dass** dem Gurtaufroller (23) zumindest ein Gurtaufroller-Transponder (35) zugeordnet ist, und dass der Gurtaufroller-Transponder (35) nicht direkt am Gurtaufroller (23), sondern an einem Gurtband (25) des Gurtaufrollers (23) außerhalb des Karosseriesäulen-Hohlraums (11) befestigt ist.

2. Verfahren nach Anspruch 1, **dadurch gekennzeichnet, dass** das aus dem Gurtaufroller (23) herausgeführte Gurtband (25) an seinem Gurtbandende (27) einen Gurtendbeschlag (21) aufweist, der im Fahrzeuginnenraum (20) an einem Endbeschlagstraffer oder ortsfest an der Fahrzeug-Karosserie (1) befestigt ist, und dass insbesondere der Gurtaufroller-Transponder (35) am Gurtbandende (27) befestigt ist.

3. Verfahren nach Anspruch 1 oder 2, **dadurch gekennzeichnet, dass** das Gurtband (25) einen Zweilagenaufbau aufweist, bei dem bevorzugt die Gurtband-Lagen (39, 41) miteinander vernäht sind, und dass der Gurtaufroller-Transponder (35) in dem Zweilagenaufbau integriert ist, und dass insbesondere der Gurtaufroller-Transponder (35) zwischen den beiden Gurtband-Lagen (39, 41) angeordnet ist und insbesondere darin eingenäht ist.

4. Verfahren nach Anspruch 3, **dadurch gekennzeichnet, dass** zur Anbindung am Gurtendbeschlag (21) das Gurtband (25) am Gurtbandende (27) umgeschlagen ist, und zwar unter Bildung einer Gurtbandschlaufe (29), die durch eine Gurtöse (31) des Gurtendbeschlags (21) geführt ist, und dass insbesondere der Gurtband-Umschlag (33) und das Gurtband (25) einen Zweilagenaufbau bilden, bei dem die beiden Gurtband-Lagen miteinander verbunden, insbesondere vernäht, sind.

5. Verfahren nach Anspruch 4, **dadurch gekennzeichnet, dass** der Gurtaufroller-Transponder (35) in dem Zweilagenaufbau aus Gurtband-Umschlag (33) und Gurtband (25) integriert ist, und dass insbesondere der Gurtaufroller-Transponder (35) zwischen dem Gurtband-Umschlag (33) und dem Gurtband (25) angeordnet ist und insbesondere darin eingenäht ist.

6. Verfahren nach einem der vorhergehenden Ansprüche, **dadurch gekennzeichnet, dass** der Gurtaufroller-Transponder (35) einen Chip (43) und eine Antenne (45) aufweist, und/oder dass insbesondere der Gurtaufroller-Transponder (35) zusammen mit einer Vielzahl von weiteren Gurtaufroller-Transpondern (35) auf einer Endlos-Folienbahn (47) vorgehalten sind, die bevorzugt auf einer Rolle (49) aufwickelbar ist, und dass insbesondere beim Gurtband-Herstellungsprozess die Endlos-Folienbahn (47) in einer Gurtbahn-Längsrichtung (L) langestreckt im Gurtband (25) integriert ist und/oder zwischen den beiden Gurtband-Lagen (39, 41) positioniert wird, und/oder dass insbesondere sich die Endlos-Folienbahn (47) komplett über die gesamte Gurtband-Länge erstreckt.

7. Verfahren nach Anspruch 1 oder 2, **dadurch gekennzeichnet, dass** das Gurtband (25) einen Einlagenaufbau mit miteinander verwebten Kettfäden (40) und Schussfäden (42) aufweist, und dass insbesondere von den Kettfäden (40) zumindest ein modifizierter Kettfaden (44) eine Antennen-Eigenschaft eines RFID-Transponders aufweist, und dass insbesondere zumindest ein Transponder-Chip (43) auf der Gurtband-Oberfläche positioniert ist und in Kontakt mit dem modifizierten Kettfaden (44) ist, und dass insbesondere der Transponder-Chip (43) zwischen einem Chip-Träger (51) und der Gurtband-Oberfläche positioniert ist, wobei bevorzugt der Chip-Träger (51) durch Thermoformen stoffschlüssig mit dem Gurtband (25) verbunden ist.

8. Verfahren nach Anspruch 7, **dadurch gekennzeichnet, dass** das einlagige Gurtband (25) eine Schussfaden-Doppellage (53) aufweist mit in Gurtband-Dickenrichtung übereinanderliegenden Schussfaden-Lagen (55, 57), und dass insbesondere der modifizierte Kettfaden (44) zwischen den beiden Schussfaden-Lagen (55, 57) gelegt ist, und/oder dass der modifizierte Kettfaden (44) an einer Kontaktstelle (K) nach außen freigelegt ist, an der der Transponder-Chip (43) in Kontakt mit dem nach außen freigelegten, modifizierten Kettfaden (44) ist.

9. Verfahren nach Anspruch 1, **dadurch gekennzeichnet, dass** der Gurtaufroller-Transponder (35) als ein Standard-Transponder ausgeführt ist, der am fertiggestellten Gurtband (25), etwa am Gurtband-Ende (27), aufgeklebt oder aufgenäht wird.

10. Sicherheitsgurt-Anordnung zum Verbau in einer Fahrzeug-Karosserie (1) gemäß einem Verfahren nach einem der vorherigen Ansprüche, **dadurch gekennzeichnet, dass** die Sicherheitsgurt-Anordnung (19) einen Gurtaufroller (23) aufweist, der mit einem Gurtaufroller-Transponder (35) gekennzeichnet ist, und dass der Gurtaufroller-Transponder (35) an dem, aus dem Gurtaufroller (23) führenden Gurtband (25) befestigt ist.

## Claims

1. Method for manufacturing a vehicle, in which add-on parts are mounted on a vehicle body (1) in a production line (P) of a vehicle construction plant, attached to each of which add-on parts is an add-on part transponder which, after installation of the respective add-on part in the vehicle, is detected by means of an RFID reader device (37) for construction state documentation, wherein, in the production line (P), a belt retractor (23) of a safety belt assembly (19) is fitted as an add-on part into a cavity (11) of a vehicle body column (5) formed as a hollow beam, **characterized in that** the belt retractor (23) is assigned at least one belt retractor transponder (35), and **in that** the belt retractor transponder (35) is not attached directly to the belt retractor (23), but rather to a belt strap (25) of the belt retractor (23) outside the body column cavity (11).

2. Method according to Claim 1, **characterized in that** the belt strap (25) fed out from the belt retractor (23) has at its belt strap end (27) a belt end fitting (21), which in the vehicle interior (20) is attached to an end fitting tensioner or in a fixed manner to the vehicle body (1), and **in that** in particular the belt retractor transponder (35) is attached to the belt strap end (27).

3. Method according to Claim 1 or 2, **characterized in that** the belt strap (25) has a two-layer structure, in which preferably the belt strap layers (39, 41) are sewn to each other, and **in that** the belt retractor transponder (35) is integrated in the two-layer structure, and **in that** in particular the belt retractor transponder (35) is arranged between the two belt strap layers (39, 41) and in particular is sewn therein.

4. Method according to Claim 3, **characterized in that**, for connection to the belt end fitting (21), the belt strap (25) is folded over at the belt strap end (27), thereby forming a belt strap loop (29), which is fed through a belt eye (31) of the belt end fitting (21), and **in that** in particular the belt strap fold (33) and the belt strap (25) form a two-layer structure in which the two belt strap layers are connected, in particular sewn, to each other.

5. Method according to Claim 4, **characterized in that** the belt retractor transponder (35) is integrated in the two-layer structure made up of the belt strap fold (33) and the belt strap (25), and **in that** in particular the belt retractor transponder (35) is arranged between the belt strap fold (33) and the belt strap (25) and in particular is sewn therein.

6. Method according to one of the preceding claims, **characterized in that** the belt retractor transponder (35) has a chip (43) and an antenna (45), and/or **in that** in particular the belt retractor transponder (35) is provided together with a large number of further belt retractor transponders (35) on a continuous film sheet (47), which preferably can be wound up on a roll (49), and **in that** in particular, during the belt strap manufacturing process, the continuous film sheet (47) is integrated in the belt strap (25) while stretched out along a belt-sheet longitudinal direction (L) and/or is positioned between the two belt strap layers (39, 41), and/or in that in particular the continuous film sheet (47) extends completely over the entire length of the belt strap.

7. Method according to Claim 1 or 2, **characterized in that** the belt strap (25) has a single-layer structure with interwoven warp threads (40) and weft threads (42), and **in that** in particular, of the warp threads (40), at least one modified warp thread (44) has an antenna property of an RFID transponder, and **in that** in particular at least one transponder chip (43) is positioned on the belt strap surface and is in contact with the modified warp thread (44), and **in that** in particular the transponder chip (43) is positioned between a chip carrier (51) and the belt strap surface, wherein preferably the chip carrier (51) is integrally connected to the belt strap (25) by thermoforming.

8. Method according to Claim 7, **characterized in that** the one-layer belt strap (25) has a weft-thread double layer (53) with weft thread layers (55, 57) lying one on top of the other in the belt strap thickness direction, and **in that** in particular the modified warp thread (44) is placed between the two weft thread layers (55, 57), and/or **in that** the modified warp thread (44) is exposed to the outside at a contact point (K), at which the transponder chip (43) is in contact with the modified warp thread (44) exposed to the outside.

9. Method according to Claim 1, **characterized in that** the belt retractor transponder (35) is designed as a standard transponder which is adhesively attached or sewn to the finished belt strap (25), for instance at the belt strap end (27).

10. Safety belt assembly for installation in a vehicle body (1) by a method according to one of the preceding claims, **characterized in that** the safety belt assembly (19) has a belt retractor (23), which is identified by a belt retractor transponder (35), and **in that** the belt retractor transponder (35) is attached to the belt strap (25) fed out from the belt retractor (23).

## Revendications

1. Procédé de fabrication d'un véhicule, dans lequel sur une chaîne de production (P) d'une usine de construction de véhicules, des pièces rapportées sont montées sur une carrosserie de véhicule (1), sur lesquelles est fixé respectivement un transpondeur de pièce rapportée qui est détecté après l'installation de la pièce rapportée respective dans le véhicule au moyen d'un lecteur RFID (37) pour une documentation d'état de construction, dans lequel sur la chaîne de production (P), en tant que pièce rapportée, un rétracteur de ceinture (23) d'un agencement de ceinture de sécurité (19) est installé dans une cavité (11) d'un montant de carrosserie de véhicule (5) formé en tant que support creux,
**caractérisé en ce qu'**au moins un transpondeur de rétracteur de ceinture (35) est associé au rétracteur de ceinture (23), et **en ce que** le transpondeur de rétracteur de ceinture (35) n'est pas fixé directement au rétracteur de ceinture (23) mais à une sangle (25) du rétracteur de ceinture (23) à l'extérieur de la cavité de montant de carrosserie (11).

2. Procédé selon la revendication 1, **caractérisé en ce que** la sangle (25) sortie du rétracteur de ceinture (23) présente à son extrémité de sangle (27) une ferrure d'extrémité de ceinture (21) qui est fixée dans l'habitacle de véhicule (20) à un tendeur de ferrure d'extrémité ou de manière stationnaire à la carrosserie de véhicule (1), et **en ce qu'**en particulier le transpondeur de rétracteur de ceinture (35) est fixé à l'extrémité de sangle (27).

3. Procédé selon la revendication 1 ou 2, **caractérisé en ce que** la sangle (25) présente une structure à deux couches dans laquelle de préférence les couches de sangle (39, 41) sont cousues ensemble, et **en ce que** le transpondeur de rétracteur de ceinture (35) est intégré dans la structure à deux couches, et **en ce qu'**en particulier le transpondeur de rétracteur de ceinture (35) est disposé entre les deux couches de sangle (39, 41) et est en particulier cousu dans celles-ci.

4. Procédé selon la revendication 3, **caractérisé en ce que** pour l'attache à la ferrure d'extrémité de ceinture (21), la sangle (25) est rabattue à l'extrémité de sangle (27), notamment en formant une boucle de sangle (29) qui est guidée à travers un œillet de ceinture (31) de la ferrure d'extrémité de ceinture (21), et **en ce qu'**en particulier le rabat de sangle (33) et la sangle (25) constituent une structure à deux couches dans laquelle les deux couches de sangle sont reliées, en particulier cousues, ensemble.

5. Procédé selon la revendication 4, **caractérisé en ce que** le transpondeur de rétracteur de ceinture (35) est intégré dans la structure à deux couches composée du rabat de sangle (33) et de la sangle (25), et **en ce qu'**en particulier le transpondeur de rétracteur de ceinture (35) est disposé entre le rabat de sangle (33) et la sangle (35) et est en particulier cousu dans celui-ci.

6. Procédé selon l'une quelconque des revendications précédentes, **caractérisé en ce que** le transpondeur de rétracteur de ceinture (35) présente une puce (43) et une antenne (45), et/ou **en ce qu'**en particulier le transpondeur de rétracteur de ceinture (35) est chargé conjointement avec une pluralité d'autres transpondeurs de rétracteur de ceinture (35) sur une bande de feuille sans fin (47) qui peut de préférence être enroulée sur un rouleau (49), et **en ce qu'**en particulier lors du processus de fabrication de sangle, la bande de feuille sans fin (47) est intégrée dans une direction longitudinale de bande de ceinture (L) en étant allongée dans la sangle (25) et/ou est positionnée entre les deux couches de sangle (39, 41), et/ou **en ce qu'**en particulier la bande de feuille sans fin (47) s'étend entièrement sur toute la longueur de sangle.

7. Procédé selon la revendication 1 ou 2, **caractérisé en ce que** la sangle (25) présente une structure d'insert avec des fils de chaîne (40) et des fils de trame (42) tissés ensemble, et **en ce qu'**en particulier parmi les fils de chaîne (40), au moins un fil de chaîne modifié (44) présente une propriété d'antenne d'un transpondeur RFID, et **en ce qu'**en particulier au moins une puce de transpondeur (43) est positionnée sur la surface de sangle et est en contact avec le fil de chaîne modifié (44), et **en ce qu'**en particulier la puce de transpondeur (43) est positionnée entre un support de puce (51) et la surface de sangle, dans lequel de préférence le support de puce (51) est relié à la sangle (25) par liaison de matière par thermoformage.

8. Procédé selon la revendication 7, **caractérisé en ce que** la sangle (25) monocouche présente une double couche de fils de trame (53) avec des couches de fils de trame (55, 57) superposées dans la direction d'épaisseur de sangle, et **en ce qu'**en particulier le fil de chaîne modifié (44) est placé entre les deux couches de fils de trame (55, 57), et/ou **en ce que** le fil de chaîne modifié (44) est exposé à l'extérieur au niveau d'un point de contact (K) où la puce de transpondeur (43) est en contact avec le fil de chaîne modifié (44) exposé à l'extérieur.

9. Procédé selon la revendication 1, **caractérisé en ce que** le transpondeur de rétracteur de ceinture (35) est réalisé sous la forme d'un transpondeur standard qui est collé ou cousu sur la sangle (25) finie, par exemple à l'extrémité de sangle (27).

10. Agencement de ceinture de sécurité à installer dans une carrosserie de véhicule (1) selon un procédé selon l'une quelconque des revendications précédentes, **caractérisé en ce que** l'agencement de ceinture de sécurité (19) présente un rétracteur de ceinture (23) qui est **caractérisé par** un transpondeur de rétracteur de ceinture (35), et en ce que le transpondeur de rétracteur de ceinture (35) est fixé à la sangle (25) sortant du rétracteur de ceinture (23).
